# EUROPEAN PATENT SPECIFICATION

(11) **EP 1 783 096 B1**
(45) Date of publication and mention of the grant of the patent: **20.08.2014**
(21) Application number: 05751143.8
(22) Date of filing: 14.06.2005
(51) Int. Cl.: C01B 21/082, C09K 11/08, C09K 11/80, H01L 33/00, C09K 11/77

(54) **ALPHA-SIALON POWDER AND PROCESS FOR PRODUCING THE SAME**
ALPHA-SIALON-PULVER UND HERSTELLUNGSVERFAHREN DAFÜR
POUDRE DE ALPHA-SIALON ET PROCÉDÉ SERVANT À PRODUIRE CELLE-CI

(30) Priority: 30.07.2004 JP 2004224812
(43) Date of publication of application: 09.05.2007
(73) Proprietor: National Institute for Materials Science, Ibaraki 3050047 (JP); DENKI KAGAKU KOGYO KABUSHIKI KAISHA, Chiyoda-ku, Tokyo 100-8455 (JP)
(72) Inventor: MITOMO, Mamoru, Tsukuba-shi, Ibaraki 3050047 (JP); HIROSAKI, Naoto, Tsukuba-shi, Ibaraki 3050047 (JP); EMOTO, Hideyuki CENTRAL RESEARCH INSTITUTE, Machida-shi, Tokyo 1948560 (JP); IBUKIYAMA, Masahiro CENTRAL RESEARCH INSTITUTE, Machida-shi, Tokyo 1948560 (JP)
(74) Representative: Marshall, John Grahame
(86) International application number: PCT/JP2005/011198
(87) International publication number: WO 2006/011317

(56) References cited:
- EP-A2- 1 278 250
- EP-A2- 1 555 307
- JP-A- 2002 363 554
- JP-A- 2003 336 059
- JP-A- 2004 186 278
- XIE R-J ET AL: "PREPARATION AND LUMINESCENCE SPECTRA OF CALCIUM- AND RARE-EARTH (R = EU, TB, AND PR)-CODOPED ALPHA-SIALON CERAMICS", JOURNAL OF THE AMERICAN CERAMIC SOCIETY, BLACKWELL PUBLISHING, MALDEN, MA, US, vol. 85, no. 5, 1 October 2000 (2000-10-01), pages 1229-1234, XP001151981, ISSN: 0002-7820
- NAKAYAMA S ET AL: "OXIDATION BEHAVIOR OF RE-ALPHA,SIALON CERAMICS (RE = ND, SM, GD, DY, Y, HO, ER, YB)", JOURNAL OF THE CERAMIC SOCIETY OF JAPAN, INTERNATIONAL EDITION, FUJI TECHNOLOGY PRESS, TOKYO, JP, vol. 101, no. 10, 1 January 1993 (1993-01-01), pages 1184-1186, XP008052851, ISSN: 0912-9200
- NAKAYAMA S. ET AL: 'Oxidation Behavior of RE-a-Sialon Ceramics(RE=Nd,Sm,Gd,Dy,Y,Ho,Er,Yb).' JOURNAL OF THE CERAMIC SOCIETY OF JAPAN. vol. 101, no. 10, 1993, pages 1184 - 1186, XP008052851

## Description

### Technical Field

The present invention relates to a method of producing an α -sialon powder that can be utilized, among others, as a phosphor for a white light emitting diode which uses a blue or ultraviolet light emitting diode as its light source.

### Background Art

Being a solid solution of α type silicon nitride, an α-sialon (Si-Al-O-N) because of its high hardness and excellent wear resistance, high-temperature strength and oxidation resistance is finding its uses in such as slide members and high-temperature resistant structural components.

The α-sialon has a structure in which atoms of a specific element (such as Ca, Li, Mg, Y or one or more lanthanoid except La and Ce) are entered into the crystal lattice to form a solid solution while maintaining their electrical neutrality so that the Si-N bond is in part substituted with the Al-N bond (in part also with Al-O bond). In recent years, after the discovery that by suitably selecting the element for this entry and solid solving, fluorescence properties which are useful for a white light emitting diode (hereinafter referred to as "white LED") can be revealed, its putting to practical use has been under investigation (See References 1 to 6 below).

An α-sialon for use as a slide member, structural component or the like has conventionally been made in the form of a dense sintered body. In this case, a mass of mixed powders of silicon nitride (Si₃N₄), aluminum nitride (AlN) and an oxide of a solid-solving element is sintered in a nitrogen atmosphere under normal or gas pressure or by hot pressing or the like to form a solid solution while densifying the mass simultaneously. This is to ensure that a liquid phase formed of a surface oxide layer of silicon nitride and aluminum nitride and the oxide of the solid-solving element midway of the sintering process allows the mass densification to proceed and that later in the sintering process the liquid phase is solid-solved within the powder grains so as not to leave a glass phase at the grain boundaries.

In the case where a mass of α-sialon powder is used as the starting material, sintering even at a temperature close to its decomposition temperature does not allow the mass to be densified well and does necessitate an assistant in order to form the liquid phase with the result that the glass phase is then left at the grain boundaries. For reasons such as that such a grain boundary glass phase is undesirable in mechanical properties, the α-sialon powder has little been used as the starting material for uses of α-sialon in slide members, structural components and the like.

On the other hand, while a phosphor for white LED is used in which particles of submicron to micron size are dispersed in a molding material such as epoxy resin, it is the present situation that for the reason stated above, any α-sialon powder has never been marketed.

As a typical process of synthesizing an α-sialon powder, the reduction nitriding method can be cited in which a mass of mixed powders of aluminum oxide (Al₂O₃), silicon oxide (SiO₂) and an oxide of a metal whose atoms are to be solid-solved in the lattice is heat-treated in the presence of carbon in a nitrogen atmosphere (see References 7 to 9 below).

Reference 1: Japanese Patent Laid Open Application JP 2002-363554 A
Reference 2: Japanese Patent Laid Open Application JP 2003-336059 A
Reference 3: Japanese Patent Laid Open Application JP 2003-124527 A
Reference 4: Japanese Patent Laid Open Application JP 2003-206418 A
Reference 5: Japanese Patent Laid Open Application JP 2004-67837 A
Reference 6: J. W. H. van Krebel, "On new rare-earth doped M-Si-Al-O-N materials", TU Eindhoven, The Netherlands, pp.145 - 161 (1998)
Reference 7: M. Mitomo et al., "Preparation of α-SiAlON Powders by Carbothermal Reduction and Nitridation", Ceram. Int., Vol. 14, pp.43 - 48 (1988)
Reference 8: J. W. T. van Rutten et al., "Carbothermal Preparation of Ca - α - SiAlON", J. Eur. Ceram. Soc., Vol.15, pp.599 - 604 (1995)
Reference 9: K. Komeya et al., "Hollow Beads Composed of Nanosize Ca α -sialon Grains", J. Am. Ceram. Soc., Vol.83, pp.995 - 997 (2000)

Although the method described above has the feature that the α-sialon powder can be synthesized at a relatively low temperature around 1500°C from the source powders which are inexpensive, not only must a plurality of intermediate products be had in way stages of the synthesis process, but also the production of gas components such as SiO and CO has made it difficult to yield a product which is of single phase and to control the composition and granular size strictly.

An α-sialon powder can also be obtained by firing at a high temperature a mixture of silicon nitride, aluminum nitride and an oxide of an element whose atoms are to be solid-solved in the lattice and then pulverizing the resultant sintered body of α-sialon.

The conventional methods of making an α-sialon powder require a pulverization treatment under severe conditions in order to ensure that intergranular bonds by liquid phase sintering in the firing process remain firm and to obtain the powder of a desired particle size. As the pulverizing conditions become severer, the problem arises that the chances of entry of impurities are increased and also of entry of defects onto individual particle surfaces.

The use as a phosphor of an α-sialon powder as made by the conventional methods poses the problem that inasmuch as it is the particle surface area which mainly is responsive to excitation light, the defects introduced by the pulverization treatment into such surface areas largely affect its fluorescent properties and cause its light emitting characteristic to deteriorate.
The preamble of claim 1 is derivable from EP 1555307 A2 which is an earlier patent document published after the present filing date and which accordingly forms part of the state of the art only under Article 54(3) EPC. EP 1555307 A2 further discloses an example in which mixed powder is heat treated in a nitrogen gas atmosphere at a temperature of 1200 to 1400°C for 4 hours and from 1400 to 1600°C for 2.5 hours to obtain an a -sialon powder.
The preamble of claim 1 is also derivable from Xie R-J et al: "Preparation and Luminescence Spectra of Calcium- and Rare-Earth (R = Eu, Tb, And Pr)-Codoped Alpha-SiAlON Ceramics", Journal of the American Ceramic Society, Blackwell Publishing, Malden, MA, US, vol. 85, no. 5, 1 October 2000 (2000-10-01), pages 1229-1234, XP001151981, ISSN: 0002-7820. This earlier document further discloses heat treatment at 1750°C for 1 hour at atmospheric pressure in a nitrogen atmosphere.

Nakayama S. et al. in "Oxidation behaviour of RE-α-SiAlON ceramics (RE = Nd, Sm, Gd, Dy, Y, Ho, Er, Yb)", Journal of the Ceramic Society of Japan, Int. Ed., vol. 101, no. 10, 1 January 1993 (1993-01-01), pages 1184-1186 disclose a process for preparing α-SiAION powder of the type RE_{0,5}(Si,Al)₁₂(0,N)₁₆ by first milling the raw components, followed by pressing said mixture at 100 MPa, firing said mixing at 1700°C and further pulverizing the powder to obtain homogeneous powder with a grain size from 1 to 3 µm. D3 does not teach, that the density of the mixed powder prior calcination shall be below 1.5 g/cm³.

EP 1 278 250 A discloses the use of a SiAION powder with a grain size of 0,5 to 5 µm in light emitting devices.

### Disclosure of the Invention

With these problems taken into account, it is an object of the present invention to provide an α-sialon powder that can be an excellent phosphor material for a white LED which uses a blue light emitting diode (hereinafter referred to as "blue LED" or an ultraviolet light emitting diode (hereinafter referred to as "ultraviolet LED") as its light source, and to provide a method of making an α-sialon powder whereby such an α-sialon powder can be made reproducibly, stably and in a large quantity.

The present inventors made experimental examinations on the making of an α-sialon powder that can be utilized as a phosphor for a white LED which uses a blue or an ultraviolet LED as its light source. As a result, we have come to acquire the knowledge that an phosphor by α-sialon powder that is excellent in light emitting characteristic is easily obtained if a selected source mixed powdery material is loaded in a specified state, heated under a specified condition and pulverized into a specified particle size and that the phosphor by α-sialon powder is even more easily obtained if its making is performed in a crucible of a specified material. We have arrived at the present invention.

While the density as a product of the weight of a source mixed powder material divided by the volume it takes will be referred to hereafter as "bulk density", it should be understood that the same does not include a binder or pore-forming agents if used that has disappeared prior to the synthesis.

In order to achieve the object mentioned above, there is provided in accordance with the present invention a method of making a powder of α-sialon powder which is represented by general formula: (M1)_{X}(M2)_{Y}(Si, Al)₁₂(O, N)₁₆ (wherein M1 represents one or more elements selected from the group which consists of Li, Mg, Ca, Y and lanthanoid (except La and Ce) and M2 represents one or more elements selected from the group which consists of Ce, Pr, Eu, Tb, Yb and Er and wherein 0.3 < X + Y < 1.5 and 0 < Y < 0.7), the method being characterized in that it comprises: loading a container with a mixed powdery material of (a) silicon nitride, (b) aluminum nitride, (c) an M1 containing compound and (d) an M2 containing compound and at need (e) aluminum oxide so that its bulk density is not more than 1.5 g/cm³; heat-treating said mixed powdery material at a temperature of 1,600 to 2,000°C in a nitrogen atmosphere to obtain an α-sialon; and pulverizing the α-sialon obtained by the heat treatment into an α-sialon power having an average particle size of not less than 1µm wherein 90 % by volume of the whole α-sialon powder have particle sizes of 15µm or less.

Preferably in the method of making mentioned above, M1 in the said mixed powdery material is Ca and that 0.01 < Y / (X + Y) < 0.7. The container preferably has at least an area thereof in contact with the said mixed powdery material made of boron nitride.

According to the method of making mentioned above, the α -sialon powder that has a composition and particle sizes suitable as a phosphor for a white LED can be made stably and in a large quantity. The α-sialon powder made in this way is made into a powdery form under gentle pulverization conditions and, being free from surface defects introduced by working strain is excellent in light emitting characteristic.

An α-sialon powder made by the above method preferably has an average particle size ranging between 2 and 7pm wherein 80 % by volume of the whole α -sialon powder have particle sizes ranging between 1 and 10µm. Thus, the α-sialon powder can be obtained under gentle pulverization conditions. Being free from surface defects, such an α-sialon powder is suitable to form a phosphor which can be excited by a blue or an ultraviolet LED to emit a yellow light in its peak wavelength.

### Brief Description of the Drawings

In the drawings,
Fig. 1 is a graph illustrating particle size distributions of an α-sialon powder of Example 1 and that of Comparative Example 4;
Fig. 2 is a diagram illustrating the excitation spectra of α -sialon powders of Examples 1 and 2 and of Comparative Example 4; and
Fig. 3 is a diagram illustrating the emission spectra of α -sialon powders by external excitation in Examples 1 and 2 and Comparative Example 4.

### Best Modes for Carrying, Out the Invention

The present invention will better be understood from the following detailed description and the drawings attached hereto showing certain illustrative forms of implementation of the present invention. In this connection, it should be noted that such forms of implementation illustrated in the accompanying drawings hereof are intended in no way to limit the present invention but to facilitate an explanation and understanding thereof.

Hereinafter, forms of implementation of the present invention will be described in detail with reference to the drawing Figures.

At first, a producing method of a powder of α-sialon of the present invention will be described.

According to the present invention, an α-sialon which is represented by general formula: (M1)_{X}(M2)_{Y}(Si, M)₁₂(O, N)₁₆ (wherein M1 represents one or more elements selected from the group which consists of Li, Mg, Ca, Y and lanthanoid (except La and Ce) and M2 represents one or more elements selected from the group which consists of Ce, Pr, Eu, Tb, Yb and Er and wherein 0.3 < X + Y < 1.5 and 0 < Y < 0.7) can be obtained by heat-treating a mixed powdery material of (a) silicon nitride (Si₃N₄), (b) aluminum nitride (AlN), (c) an M1 containing compound and (d) an M2 containing compound and at need (e) aluminum oxide. By pulverizing the α-sialon thus obtained, an α-sialon powder can be made.

In the above-mentioned general formula of α-sialon, M1 represents an element solid-solved into an α-sialon lattice. As such an element, there are known Li, Ca, Mg and Y as well as a lanthanoid element (except, however, La and Ce). Investigations by the present inventors indicate that if Ca is selected as M1, the composition in the aforementioned general formula of α-sialon is preferably that 0.01 < Y / (X + Y) < 0.7.

The composition mentioned above is preferred because the α -sialon is then stabilized in crystallographic structure and hard to transform into the β' phase so that a single-phase material only of the α-sialon can readily be obtained. Consequently, it is presumed that by solid-solving Ca together with an element to be described below that becomes an emission center in the making of α-sialon, a material excellent especially in emission characteristic is obtainable. As to La and Ce, it is known that they singly are not solid-soluble but if doped together with another element can be solid-solved in trace quantities.

For the second metal (M2) in the aforementioned general formula of α sialon, a lanthanoid is selected which forms an emission center to exhibit fluorescent properties. Especially, one or more metals of the group, that consists of Ce, Pr, Eu, Tb, Yb and Er, which is excel in fluorescent properties are selected.

The source components mentioned above are mixed together so that the α-sialon of a desired composition can be obtained, and in powdery forms as they are or in granular or molded forms are loaded into a container such as crucible which at least in areas thereof contacted by the source components is composed of boron nitride.

Next, the container loaded with a mixture of the source components such that its bulk density is not more than 1.5 g/cm³ is heated at a temperature ranging from 1,600 to 2,000°C in a nitrogen atmosphere for a selected time period whereby solid-solution reaction of the source components is allowed to proceed and an α-sialon is synthesized.

Each of materials which constitute the source components is preferably in the form of a powder such that it is high in purity and reactive. Oxides which are unavoidably present on particle surfaces of silicon nitride and aluminum nitride powders as non-oxide raw components need be taken into account in selecting raw materials to formulate a composition. In silicon nitride powder there exist two types of crystal systems: α and β; it may be in either or both as mixed of the systems.

Further, as to the M1 and M2 containing compounds, oxides or nitrides of M1 and M2 may be used. Or materials may be used which can be thermally decomposed to leave any ones of oxides, nitrides or oxy-nitrides of M1 and M2. As for the aluminum oxide as a material which may at need be added, too, it should preferably be in the form of a powder which is high in purity and reactive.

In the present invention, as the above mentioned raw materials which are mixed together in a selected proportion to form a raw material powder may, by being heated at a temperature of 1,600°C or more, react quickly with each other to form an α-sialon, all of the raw materials need not be in the form of a powder.

While the raw material powder filled in the container may be in any of powdery, granular and molded forms, it is essential that its bulk density be 1.5 g/cm³ or less. The bulk density that is a value of the weight of the raw material powder divided by the volume it takes, does not include a binder or pore-forming agents if used but disappearing prior to the synthesis. The bulk density of the raw materials filled in the container is set to be 1.5 g/cm³ or less is to control the progress of sintering by a liquid phase formed transitionally in the reactions. A bulk density in excess of 1.5 g/cm³ has been found undesirable because sintering proceeds accompanied by a clear shrinkage due to the high-temperature heat treatment, which not only makes the later pulverizing conditions severer but largely damages the particle surfaces in the pulverization treatment, adversely affecting the light emission characteristic as a phosphor.

The reasons why the container such as a crucible is used which at least in areas thereof contacted by the raw materials is composed of boron nitride are that boron nitride is unreactive with silicon nitride and aluminum nitride as the main raw material powders of an α-sialon and with the α-sialon as the reaction product and that it stably exists undecomposed and unmolten at a synthesis temperature up to 2,000 °C in a nitrogen atmosphere. It follows, therefore, that if the areas of a container which are contacted by the raw material powder is composed of boron nitride, then the other areas of the container need not be of boron nitride. For example, a container such as of carbon that is coated on its inner surface with boron nitride with a selected thickness may be used.

On the other hand, if carbon, which is a typical material for high-temperature firing, is used as the crucible, then silicon nitride as a raw material undesirably reacts with carbon to form silicon carbide (SiC) which is thermodynamically stable. Alumina and magnesia (MgO) as other crucible materials, silicon nitride and high-melting point metals such as molybdenum (Mo) and tungsten (W) undesirably come to react with a raw material powders, giving rise to a deviation or difference in the composition of α-sialon or come to undesirably introduce impurities which adversely affect the emission characteristic into the α-sialon.

A lid for the container is not necessarily required usually in a nitrogen atmosphere as viewed from a standpoint of the α-sialon producing reactions but is desirably used in order to prevent entry of contaminants such as thermal insulating materials in a furnace. As for what the lid and the external surface of the container, any material may be used if it is unreactive with the atmosphere at a temperature under the synthetic conditions.

If the heat-treatment temperature is less than 1,600°C, a large amount of the materials is undesirably left unreacted, and if it is more than 2,000°C, undesirably not only is interparticle sintering brought about but also thermal decomposition of the silicon nitride source material, α-sialon and boron nitride container go on. A preferred range of temperature for synthesis is between 1,650 and 1,850°C.

The heating period for the above-mentioned heat treatment ranges preferably between 1 and 20 hours. If the heating period is less than 1 hour, a large amount of the materials is undesirably left unreacted, and if it is more than 20 hours, undesirably not only is the interparticle sintering advanced excessively but also the process becomes costly.

As to the atmosphere for the above-mentioned heat treatment, it may be nitrogen at normal pressure at a temperature of less than 1,800°C. At a temperature not less than 1,800°C, higher nitrogen pressure is preferred in order to control thermal decomposition of the silicon nitride source material and α-sialon. Since the nitrogen pressure exceeding 1 MPa entails a considerable amount of expenditure for the synthesis furnace, nitrogen of a pressure not more than 1 MPa is preferably selected.

The α-sialon thus synthesized can be pulverized to make an α-sialon powder. The α-sialon synthesized is in the form of blocks which are pulverized in a combined processing step of disintegration, crushing and classification into the α-sialon powder of a desired range of particle sizes. The α-sialon powder so made can be applied to one of a variety of uses.

Based on the results of examination by the present inventors, the α-sialon powder for use as a phosphor for a white LED should preferably have a specified range of particles sizes that the α-sialon powder has an average particle size of 1 to 10 µm wherein 90 % by volume of the α-sialon powder has particle sizes of 15 µm or less. If 90 % by volume of the α-sialon powder has particle sizes of more than 15 µm, then sedimentation in the step of dispersing into a sealing material such as epoxy resin is undesirably liable to occur to make the uniform dispersion difficult. If the α-sialon powder has an average particle size less than 1 µm, then the proportion of the particles in which the crystal is necessarily broken becomes higher undesirably to give rise to inconveniences such as that the emission characteristic deteriorates, that the second agglomeration occurs and that it becomes hard to handle.

In order that a phosphor molded in resins converts a blue or an ultraviolet LED light efficiently, it is required that the phosphor has a particle size in the order of microns and particles uniform in particle size be uniformly dispersed in the molding resin. To this end, it is preferable that the α-sialon powder has an average particle size of 2 to 7 µm and that 80 % by volume of the entire α-sialon powder has particle sizes ranging between 1 to 10 µm.

With respect to the disintegration or crushing treatment mentioned above, it should be noted further that although the α -sialon mass or block excels in crushability and can easily be crushed such as by a mortar, the use of a standard crusher such as a ball grinder or oscillation mill therefor is naturally permissible.

The present invention is further described below with respect to specific examples thereof.

### Example 1

In Example 1, the source material powders used to prepare an α-sialon powder were (a) silicon nitride powder (made by Ube Kosan as of grade E10), (b) aluminum nitride powder (made by Tokuyama as of F grade), (c) calcium carbonate powder (made by Kanto Kagaku as of reagent chemical) and (d) europium oxide powder (made by Shin-Etsu Kagaku Kogyo as of grade RU). They were mixed together at a proportion of (a) silicon nitride (Si₃N₄) : (b) aluminum nitride (AlN) (c) calcium carbonate (CaCO₃) : (d) europium oxide (Eu₂O₃) = 52.3 : 36.2 : 10.9 : 0.6 (molar ratio) by wet ball mill mixing in an ethanol by a pot of silicon nitride material and balls for a time period of 1 hour, then filtered and dried to obtain a mixed powder.

The mixed powder in an amount of 25 grams was loaded into a crucible made of boron nitride and having an inner diameter of 50 mm and a height of 40 mm and was then lightly tapped. The mixed powder at this time had a bulk density of 0.45 g/cm³ found from the loading height. Then, covered with a lid made of boron nitride, the crucible was heated in a nitrogen atmosphere of atmospheric pressure by an electric furnace having carbon heater at a temperature of 1,750°C for a time period of 4 hours. The mixed powder after the heating became a yellowish product in the form of blocks that could readily be collected from the crucible. The product thus obtained was disintegrated by an agate mortar into particles which were passed through a sieve with an aperture of 45 µm to obtain a synthetic powder.

For the synthetic powder obtained in Example 1, the crystalline phase was identified by the X-ray diffraction (XRD) method and the particle size distribution was measured by the laser diffraction scattering method. The XRD measurement indicated that the crystalline phase of the Example 1 product was a single α-sialon phase.

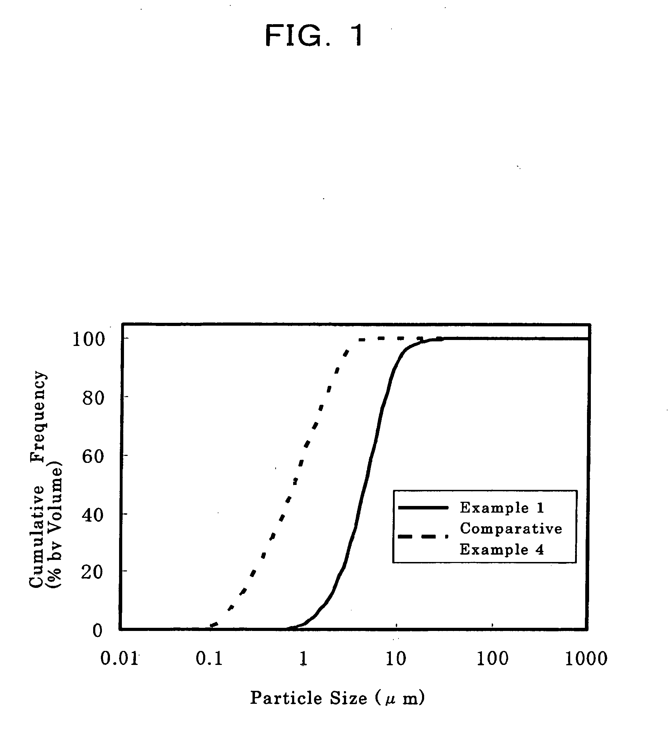

Fig. 1 is a graph illustrating particle size distributions of an α-sialon powder of Example 1 and that of Example 4 to be described later. In the graph of Fig. 1, the abscissa axis represents the particle size (in µm) and the ordinate axis represents the cumulative frequency (in % by volume). The particle size distribution of the α -sialon powder of Example 1 is shown by the solid curve. As is apparent from the graph of Fig. 1, it has been found that the α -sialon of Example 1 has an average particle size of 4.5 µm and 90 % by volume particle size is 9.1 µm. Also, with 91.0 % by volume of the whole α-sialon powder included having particle sizes ranging between 1 and 10 µm, it is seen that the powder is of a grain size suitable as a phosphor for a white LED.

### Example 2

In Example 2, an amount of 25 grams of the same source material powders as used in Example 1 was uniaxially pressed in a mold having an inner diameter of 40 mm under a pressure of 20 MPa to give rise to a formed body having a bulk density of 1.2 g/cm³. The formed body was then loaded in the same crucible as in Example 1 and heated there under the same conditions as in Example 1. The formed body after the heating had a bulk density of 1.4 g/cm³ and were thus somewhat densified from before it was heated. As the same in Example 1, a product thus obtained was disintegrated by a mortar into particles which were passed through a sieve with an aperture of 45 µm to obtain a synthetic powder. The product in Example 2 was somewhat worse in crushability than that in Example 1.

The crystalline phase of the Example 2 product according to its XRD measurement was a single α-sialon phase. The α-sialon powder in Example 2 according to its particle size distribution measurement had an average particle size of 6.5 µm and particle size distribution characteristics that 90 % by volume particle size was 13.0 µm and 82 % by volume of the whole α-sialon powder was included having particle sizes ranging between 1 and 10 µm. It is seen that the powder is of a grain size suitable as a phosphor for a white LED.

Mention is next made of a method of making α-sialon powders according to Comparative Examples.

### Comparative Example 1

In Comparative Example 1, an α-sialon powder was made under the same conditions as in Example 1 except that the heat treatment was performed at 1,500°C. A powder obtained was yellowish white in color. As XRD measurement indicated, crystalline phases existed as α silicon nitride > α-sialon > aluminum nitride in the order of their peak intensities and, with solid-solution reactions insufficient, the α-sialon suitable for a phosphor was not obtained.

### Comparative Example 2

In Comparative Example 2, a powder was made under the same conditions as in Example 1 except that a crucible made of graphite was used. A powder obtained was light green in color. In this Comparative Example 2, the graphite crucible after the powder synthesized was collected was largely eroded. As XRD measurement indicated, crystalline phases existed as β silicon carbide > α silicon nitride > α-sialon > β-sialon in the order of their peak intensities and it was observed that reaction products such as β silicon carbide as a reaction product between silicon nitride in the source powders and the graphite crucible were formed to retard α -sialon from forming. Consequently, the α-sialon suitable for a phosphor was not obtained.

### Comparative Example 3

In Comparative Example 3, a powder was made under the same conditions as in Example 1 except that a crucible made of silicone nitride was used. A powder obtained was yellow in color. In this Comparative Example 3, the powder synthesized came to react strongly with the crucible so that only a portion of the product could be collected and the silicon nitride crucible was no longer reusable. Consequently, the α-sialon suitable for a phosphor was not obtained.

### Comparative Example 4

A formed body as in Example 2 was further cold-isostatically pressed (CIP) at 200 MPa to give rise to a further formed body having a bulk density of 1.8 g/cm³, and it was heat-treated under the same conditions as in Example 2. Since the further formed body heated was densified to have a bulk density of 2.7 g/cm³, it could not be crushed or disintegrated by any agate mortar. Consequently, after being subjected to coarse pulverization by a hammer, it was subjected to wet ball mill crushing by a pot of silicon nitride material and balls for a time period of 10 hours, and then filtered and dried. Then, it was passed through a sieve with an aperture of 45 µm to obtain a synthetic powder. XRD measurement indicated that the crystalline phase of Comparative Example 4 was a single α-sialon phase. As shown in Fig. 1, it was seen from the particle size distribution measurement of Comparative Example 4 that the α-sialon powder had an average particle size of 0.8 µm and particle size distribution characteristics that 90 % by volume particle size was 2.2 µm (see the dotted curve in Fig. 1). And, it was found that 39.3 % by volume of the whole α-sialon powder was included having particle sizes ranging between 1 and 10 µm.

Mention is next made of emission characteristics as phosphors of Examples 1 and 2 and Comparative Example 4 in which single phase of α-sialon powders were obtained.

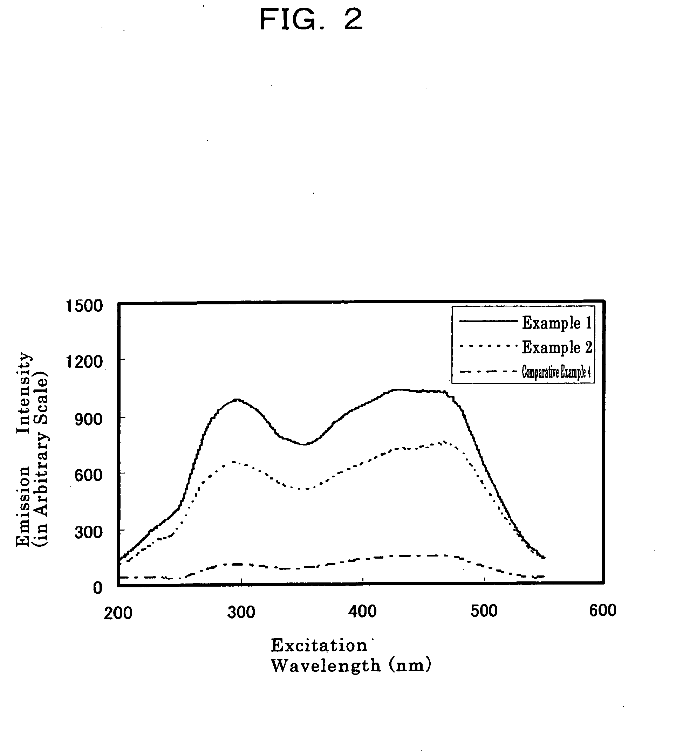

The excitation spectra of α-sialon powders of the Examples and Comparative Example mentioned above and their fluorescence spectra by external light excitations were evaluated with a fluorescence spectrophotometer. Fig. 2 is a diagram illustrating the excitation spectra of α-sialon powders of Examples 1 and 2 and of Comparative Example 4. In Fig. 2, the abscissa axis represents the excitation wavelength (in nm) and the ordinate axis represents the emission intensity (in arbitrary scale).

As is apparent from Fig. 2, it has been found that the α -sialon powders of Examples 1 and 2 give rise to intense excitations attributed to charge-transfer absorption bands of Eu - (O, N) over a broad range of wavelengths between 350nm and 500 nm and that the α-sialon powder of Example 1 is stronger in emission intensity than that of Example 2. In contrast, the α-sialon powder of Comparative Example 4 was much weaker in emission intensity. It is thus seen that the α-sialon powders of Examples 1 and 2 can be utilized as a phosphor which provides a light excitation for a blue LED of InGaN system (450nm to 500 nm).

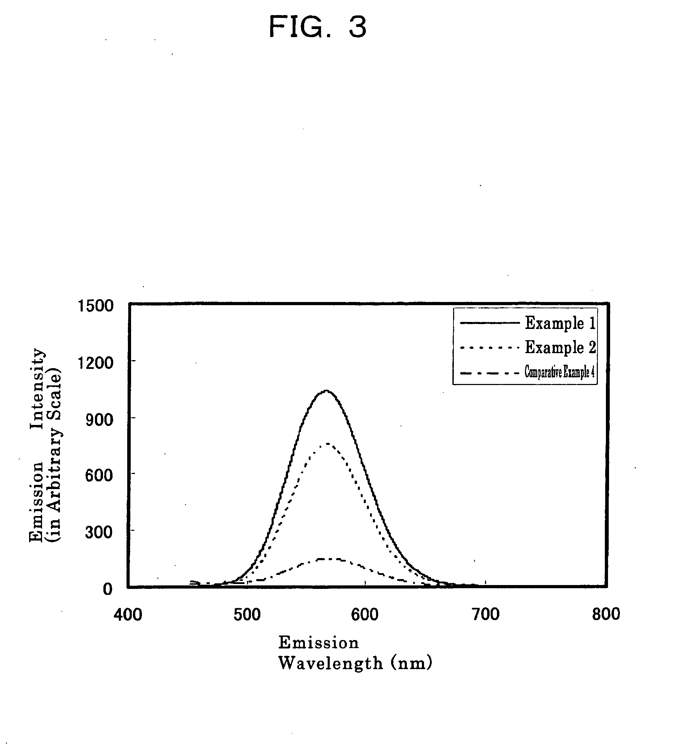

Fig. 3 is a diagram illustrating the emission spectra of α -sialon powders by external excitation in Examples 1 and 2 and Comparative Example 4. In Fig. 3, the abscissa axis represents the emission wavelength (in nm) and the ordinate axis represents the emission intensity (in arbitrary scale). The external excitation light has a wavelength of 400 nm. As is apparent from Fig. 3, it has been found that the emission spectra by the external excitation light of the α-sialon powders of Examples 1 and 2 as phosphors have a peak at a wavelength around 570 nm, emitting an intense yellow light and the α-sialon powdery phosphor of Example 1 is stronger in emission intensity than that of Example 2. In contrast, the α-sialon powdery phosphor of Comparative Example 4 emits a yellow light having a peak at around 570 nm which is, however, of an intensity as weak as 1/5 of that of Example 1. It is thus seen that the α -sialon powders of Examples 1 and 2 can be utilized as a phosphor which provide a light excitation for a blue LED of InGaN system (450nm to 500 nm) by emitting an intense yellow light.

From the results mentioned above, it is seen that Examples 1 and 2 and Comparative Examples differ in emission intensity from each other depending on their bulk densities and that having a bulk density roughly of 1.5 g/cm³ or less gives rise to excellent emission characteristics. It is thus seen that having a bulk density roughly of 1.5 g/cm³ or less allows an α-sialon product to be readily pulverized without entry of surface defects due to working strain.

The present invention is not limited to the specific Examples mentioned above but permits various modifications thereof within the scope of the appended claims as they are included in the claimed invention.

### Industrial Applicability

In accordance with the present invention, an α-sialon powder suitable for a white LED using a blue or an ultraviolet LED as its light source can be made stably and in a large quantity, the α-sialon powder as a phosphor being of a grain size suitable to provide for the white LED phosphor and being free from surface defects and hence excellent in emission characteristics.

In accordance with the method of making an α-sialon powder according to the present invention, an α-sialon powder having a composition and grain sizes suitable as phosphor can be made reproducibly and in high-volume production. An α-sialon powdery phosphor thus made upon pulverizing α-sialon under gentle crushing conditions is free from entry of surface defects due to working strain and hence excellent in light emission characteristics. Accordingly, an α-sialon powdery phosphor can be used as a phosphor for a white light emitting diode using a blue or an ultraviolet light emitting diode as its light source.

## Claims

1. A method of making a powder of α-sialon which is represented by general formula: (M1_{X}(M2)_{Y} (Si, Al)₁₂ (O, N)₁₆ (wherein M1 represents one or more elements selected from the group which consists of Li, Mg, Ca, Y and lanthanoid (except La and Ce) and M2 represents one or more elements selected from the group which consists of Ce, Pr, Eu, Tb, Yb and Er and wherein 0.3 < X + Y < 1.5 and 0 < Y < 0.7), **characterized in that** it comprises:
loading a container with a mixed powdery material of (a) silicon nitride, (b) aluminum nitride, (c) an M1 containing compound and (d) an M2 containing compound and at need (e) aluminum oxide so that its bulk density is not more than 1.5 g/cm³;
heat-treating said mixed powdery material at a temperature of 1,600 to 2,000°C in a nitrogen atmosphere to obtain an α-sialon; and
pulverizing the α-sialon obtained by the heat treatment into an α-sialon power having an average particle size of not less than 1µm wherein 90 % by volume of the whole α-sialon powder have particle sizes of 15µm or less.

2. The method of making an α-sialon powder as set forth in claim 1, **characterized in that** M1 in said mixed powdery material is Ca and that 0.01 < Y / (X + Y) < 0.7.

3. The method of making an α-sialon powder as set forth in claim 1 or claim 2, **characterized in that** said container is a container having at least an area thereof in contact with said mixed powdery material made of boron nitride.

## Patentansprüche

1. Verfahren zur Herstellung eines Pulvers von α-Sialon der allgemeinen Formel (M1)_{X}(M2)_{Y}(Si, Al)₁₂(O, N)₁₆ (wobei M1 für ein oder mehrere Element(e), ausgewählt aus der Gruppe bestehend aus Li, Mg, Ca, Y und Lanthanoid (außer La und Ce), steht und M2 für ein oder mehrere Element(e), ausgewählt aus der Gruppe bestehend aus Ce, Pr, Eu, Tb, Yb und Er, steht und wobei 0,3 < X + Y < 1,5 und 0 < Y < 0,7), **dadurch gekennzeichnet , dass** es umfasst:
Füllen eines Behälters mit einem gemischten pulverförmigen Material aus (a) Siliciumnitrid, (b) Aluminiumnitrid, (c) einer M1 enthaltenden Verbindung und (d) einer M2 enthaltenden Verbindung und gegebenenfalls (e) Aluminiumoxid, sodass seine Schüttdichte nicht mehr als 1,5 g/cm³ beträgt;
Wärmebehandeln des gemischten pulverförmigen Materials bei einer Temperatur von 1600 bis 2000 °C in einer Stickstoffatmosphäre, um ein a-Sialon zu erhalten; und
Pulverisieren des durch die Wärmebehandlung erhaltenen α Sialons zu einem
α-Sialon-Pulver mit einer mittleren Teilchengröße von nicht kleiner als 1 µm, wobei 90 Vol.-% des gesamten α-Sialon-Pulvers Teilchengrößen von 15 µm oder kleiner aufweisen.

2. Verfahren zur Herstellung eines α-Sialon-Pulvers nach Anspruch 1, **dadurch gekennzeichnet, dass** M1 in dem gemischten pulverförmigen Material Ca ist und dass 0,01 <Y/(X+Y)<0,7.

3. Verfahren zur Herstellung eines α-Sialon-Pulvers nach Anspruch 1 oder Anspruch 2, **dadurch gekennzeichnet, dass** der Behälter ein Behälter ist, der in mindestens einem Bereich, der in Kontakt mit dem gemischten pulverförmigen Material steht, aus Bornitrid hergestellt ist.

## Revendications

1. Procédé de préparation d'une poudre d'α-sialon qui est représenté par la formule générale : (M1)_{X} (M2)_{Y} (Si, Al)₁₂ (O, N)₁₆ (dans laquelle M1 représente un ou plusieurs éléments choisis dans le groupe constitué par Li, Mg, Ca, Y et un lanthanoïde (à l'exception de La et Ce) et M2 représente un ou plusieurs éléments choisis dans le groupe constitué par Ce, Pr, Eu, Tb, Yb et Er et dans laquelle 0,3 < X + Y < 1,5 et 0 < Y < 0,7), caractérisé en qu'il consiste à :
charger un récipient avec une matière pulvérulente mixte de (a) nitrure de silicium, (b) nitrure d'aluminium, (c) un composé contenant M1 et (d) un composé contenant M2 et selon le besoin (e) un oxyde d'aluminium de sorte que sa masse volumique apparente ne soit pas supérieure à 1,5 g/cm³;
traiter thermiquement ladite matière pulvérulente mixte à une température de 1600 à 2000 °C sous une atmosphère d'azote pour obtenir un α-sialon ; et
pulvériser l'α-sialon obtenu par traitement thermique en une poudre d'α-sialon ayant une taille de particule moyenne de pas moins de 1 µm, 90 % en volume de l'ensemble de la poudre d'α-sialon ayant des tailles de particule inférieures ou égales à 15 µm.

2. Procédé de préparation d'une poudre d'α-sialon selon la revendication 1, **caractérisé en ce que** M1 dans la matière pulvérulente mixte est Ca et que 0,01 < Y / (X + Y) < 0,7.

3. Procédé de préparation d'une poudre d'α-sialon selon la revendication 1 ou la revendication 2, **caractérisé en ce que** ledit récipient est un récipient ayant au moins une de ses zones en contact avec ladite matière pulvérulente mixte se composant de nitrure de bore.
